# EUROPEAN PATENT APPLICATION

(11) **EP 3 806 206 A1**
(43) Date of publication of application: **14.04.2021**
(21) Application number: 19808257.0
(22) Date of filing: 14.05.2019
(51) Int. Cl.: H01M 4/60, H01G 11/30, H01M 4/13, H01M 4/139, H01M 4/38, H01M 4/62, H01M 10/052

(54) **ELECTRODE MATERIAL, ELECTRODE, POWER STORAGE DEVICE, AND SLURRY COMPOSITION**

(30) Priority: 24.05.2018 JP 2018099909
(71) Applicant: Zeon Corporation, Tokyo 100-8246 (JP)
(72) Inventor: YONEMARU Hiroyuki, Tokyo 100-8246 (JP)
(74) Representative: Maiwald Patent- und Rechtsanwaltsgesellschaft mbH
(86) International application number: PCT/JP2019/019114
(87) International publication number: WO 2019/225404

(57) **Abstract**

An electrode material contains a complex including at least one type of transition metal ion and a ligand including at least two functional groups (A) that can coordinate with the transition metal ion and at least two conjugate pairs of functional groups (B) that are redox active. The at least two functional groups (A) may be the same or different, the at least two conjugate pairs of functional groups (B) may be the same or different, and at least some of the functional groups (A) and at least some of the functional groups (B) may be the same or different.

## Description

### TECHNICAL FIELD

The present disclosure relates to an electrode material, an electrode, an electrical storage device, and a slurry composition.

### BACKGROUND

Electrical storage devices such as batteries and capacitors are used in a wide range of applications. Therefore, improvement of constituent members of electrical storage devices, such as electrodes, has been studied in recent years with the aim of achieving even higher performance.

An electrode of an electrical storage device such as described above typically includes an electrode mixed material layer. The electrode mixed material layer contains an active material, a binder (binding material), a conductive material that is compounded as necessary, and the like, for example. Attempts have been made to improve active materials in order to achieve further improvement of electrical storage device performance.

On the other hand, coordination polymer complexes having a framework structure in which a rigid organic ligand having a functionality of 2 or higher bridges between two or more metal ions via coordinate bonds and in which nanopores of a controlled size are regularly repeated have recently been attracting interest. Such coordination polymer complexes are also referred to as metal-organic frameworks (MOFs) or porous coordination polymers (PCPs), and the adoption thereof in a wide range of applications is being anticipated.

For example, Patent Literature (PTL) 1 proposes a hydrocarbon gas separating material formed of a metal complex of an oxocarbonic acid. The metal complex of PTL 1 has excellent hydrocarbon gas separation performance.

### CITATION LIST

### Patent Literature

PTL 1: JP2014-12251A

### SUMMARY

### (Technical Problem)

In recent years, there has been continuing expansion of applications for electrical storage devices that can be repeatedly charged and discharged. It is desirable for such electrical storage devices to have little reduction of discharge capacity from the initial discharge capacity thereof even after repeated charging and discharging (i.e., have excellent cycle characteristics).

Accordingly, one object of the present disclosure is to provide an electrode material that can provide an electrical storage device having excellent cycle characteristics when used as an electrode material of the electrical storage device.

Another object of the present disclosure is to provide an electrode with which an electrical storage device having excellent cycle characteristics can be formed and a slurry composition that can be used to produce the electrode.

Yet another object of the present disclosure is to provide an electrical storage device having excellent cycle characteristics.

### (Solution to Problem)

The inventor conducted diligent studies with the aim of achieving the objects set forth above. The inventor discovered that an electrode material containing a complex including at least one type of transition metal ion and a ligand including at least a specific number of specific functional groups can display high redox activity, and, in this manner, completed the present disclosure.

Specifically, the present disclosure aims to advantageously solve the problem set forth above, and a presently disclosed electrode material comprises a complex including: at least one type of transition metal ion; and a ligand including at least two functional groups (A) that can coordinate with the transition metal ion and at least two conjugate pairs of functional groups (B) that are redox active. The at least two functional groups (A) may be the same or different, the at least two conjugate pairs of functional groups (B) may be the same or different, and at least some of the functional groups (A) and at least some of the functional groups (B) may be the same or different. The electrode material containing the complex including at least one type of transition metal ion and a ligand including specific functional groups can provide an electrical storage device having excellent cycle characteristics when used as an electrode material of the electrical storage device.

The presently disclosed electrode material is preferably crystalline. When the electrode material is crystalline, it is possible to increase the heat resistance of an electrical storage device obtained when the electrode material is used as an electrode material of the electrical storage device.

Note that it can be confirmed whether or not an electrode material is "crystalline" by a method described in the EXAMPLES section of the present specification.

In the presently disclosed electrode material, a number of hydration water molecules per one of the transition metal ion in a unit structure of the complex is preferably 0.50 or less. When the number of hydration water molecules per one transition metal ion in the complex is small with a value of 0.50 or less, cycle characteristics of an obtained electrical storage device can be further enhanced. Note that the number of hydration water molecules per one transition metal ion in a unit structure of a complex can be measured by thermogravimetric analysis such as described in the EXAMPLES section of the present specification.

Moreover, the present disclosure aims to advantageously solve the problem set forth above, and a presently disclosed electrode comprises any one of the electrode materials set forth above as an active material. By using an electrode that contains any one of the electrode materials set forth above, cycle characteristics of an electrical storage device can be enhanced.

In the presently disclosed electrode, a number of hydration water molecules per one of the transition metal ion in a unit structure of the complex contained in the electrode is preferably 0.50 or less. When the number of hydration water molecules per one transition metal ion in the complex contained in the electrode is small with a value of 0.50 or less, cycle characteristics of an electrical storage device that includes the electrode can be further enhanced.

Furthermore, the present disclosure aims to advantageously solve the problem set forth above, and a presently disclosed electrical storage device comprises: an electrolyte; and any one of the electrodes set forth above. An electrical storage device that includes any one the electrodes set forth above has excellent cycle characteristics.

In the presently disclosed electrical storage device, the electrolyte preferably does not dissolve the electrode material. When the electrolyte does not dissolve the electrode material, cycle characteristics of the electrical storage device can be further enhanced.

The presently disclosed electrical storage device preferably further comprises a counter electrode of the electrode, wherein the counter electrode contains one type of metal or an alloy including a plurality of types of metals. When an electrical storage device includes a positive electrode that contains the presently disclosed electrode material and a counter electrode that contains a metal or an alloy, high discharge capacity can be achieved.

In the presently disclosed electrical storage device, the electrode preferably further contains either or both of a cellulosic polymer and a polyether polymer. When the electrode of the electrical storage device further contains either or both of a cellulosic polymer and a polyether polymer, even better cycle characteristics can be achieved.

Also, the present disclosure aims to advantageously solve the problem set forth above, and a presently disclosed slurry composition comprises: any one of the electrode materials set forth above; and either or both of a cellulosic polymer and a polyether polymer. Through a slurry composition that contains any one of the electrode materials set forth above and either or both of a cellulosic polymer and a polyether polymer, it is possible to form an electrode that can cause an electrical storage device to display excellent cycle characteristics.

### (Advantageous Effect)

According to the present disclosure, it is possible to provide an electrode material that can provide an electrical storage device having excellent cycle characteristics when used as an electrode material of the electrical storage device.

Moreover, according to the present disclosure, it is possible to provide an electrode with which an electrical storage device having excellent cycle characteristics can be formed and a slurry composition that can be used to produce the electrode.

Furthermore, according to the present disclosure, it is possible to provide an electrical storage device having excellent cycle characteristics.

### DETAILED DESCRIPTION

The following provides a detailed description of embodiments of the present disclosure. The presently disclosed electrode material can suitably be used as an active material of an electrode for an electrical storage device. Moreover, a feature of the presently disclosed electrical storage device is that it includes an electrode containing the presently disclosed electrode material. The electrical storage device can, for example, be an electrical storage device in which protons, hydride ions, lithium ions, sodium ions, magnesium ions, aluminum ions, zinc ions, silver ions, lead ions, or organonitrogen cations serve as carrier ions. Moreover, the electrical storage device can be a secondary battery or a capacitor in which any of the types of carrier ions described above are adopted.

### (Electrode material)

A feature of the presently disclosed electrode material is that it contains a complex including at least one type of transition metal ion and a ligand including at least two functional groups (A) that can coordinate with the transition metal ion and at least two conjugate pairs of functional groups (B) that are redox active. The at least two functional groups (A) may be the same or different, the at least two conjugate pairs of functional groups (B) may be the same or different, and at least some of the functional groups (A) and at least some of the functional groups (B) may be the same or different.

### [Transition metal ion]

The presently disclosed electrode material contains at least one type of transition metal ion. Although the presently disclosed electrode material preferably contains just one type of transition metal ion, the presently disclosed electrode material may contain a plurality of types of transition metal ions. Examples of transition metal ions that can be contained in the presently disclosed electrode material include Cu, Fe, Ni, Co, Mn, V, Cr, and Ti. Of these transition metal ions, Cu (Cu¹⁺, Cu²⁺), Fe (Fe²⁺, Fe³⁺), Mn (Mn⁺, Mn²⁺, Mn³⁺, Mn⁴⁺), and Ti (Ti⁺, Ti²⁺, Ti³⁺, Ti⁴⁺) are preferable, and Cu (Cu²⁺) and Fe (Fe²⁺, Fe³⁺) are particularly preferable.

### [Complex]

The presently disclosed electrode material contains a complex including a ligand including at least two functional groups (A) that can coordinate with a transition metal ion such as described above and at least two conjugate pairs of functional groups (B) that are redox active. The functional groups (A) that can coordinate with the transition metal ion may each be a keto group, a thioketo group, an imino group, an amino group, a hydroxyl group, a carboxyl group, a thiocarboxyl group, an amide group, or a thioamide group, for example. The at least two functional groups (A) that can coordinate with the transition metal ion may be the same or different.

Moreover, the functional groups (B) that are redox active are groups from among a keto group, a thioketo group, an imino group, an amino group, a hydroxyl group, a carboxyl group, a thiocarboxyl group, an amide group, and a thioamide group that can display redox activity by forming a subsequently described "conjugate pair" in the complex structure. The listed groups can display redox activity when they form a "conjugate pair" in the ligand forming the complex. The term "conjugate pair" as used in the present specification means that when a partial structure including from a certain functional group to another functional group is imagined in a subject compound, a resonance structural formula can be defined for the partial structure. Since delocalization of π-electrons included in a multiple bond can arise in the partial structure, stable redox activity can be displayed during use as an electrode material of an electrical storage device. Note that the two constituent functional groups of the "conjugate pair" may be the same or different.

As a result of the ligand including at least two conjugate pairs of functional groups (B) that are redox active, it is possible to enhance cycle characteristics of an electrical storage device that is obtained using the electrode material containing the complex that includes this ligand. The ligand preferably includes at least a keto group or a thioketo group from among the functional groups (B) listed above.

At least some of the functional groups (A) that can coordinate with the transition metal ion and the functional groups (B) that are redox active may be the same or different. In other words, a functional group (A) that can coordinate with the transition metal ion may constitute at least one of a conjugate pair of functional groups (B) that are redox active.

More preferably, the redox-active ligand can be a compound represented by the following general formula (I).

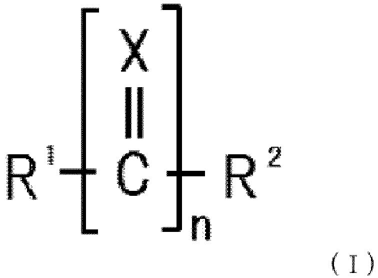

[In formula (I), X indicates an O atom or a S atom, R¹ and R² each indicate, independently of one another, an alkyl group having a carbon number of 1 to 3, an alkenyl group having a carbon number of 2 or 3, or a N atom, n is not less than 1 and not more than 4, and R¹ and R² may form a ring structure together. R¹ and R² may each, independently of one another, include one or a plurality of substituents R³.]

The substituents R³ may be any of the groups listed as the functional groups (B) described above. Note that the one or plurality of substituents R³ may be the same or different.

Specific examples of the redox-active ligand include rhodizonic acid (two pairs of keto groups and one pair of hydroxyl groups as functional groups (B)), rubeanic acid (two thioketo group-amino group pairs as functional groups (B)), dihydroxybenzoquinone (two keto group-hydroxyl group pairs as functional groups (B)), and squaric acid (one pair of keto groups and one pair of hydroxyl groups as functional groups (B)).

The ligand preferably does not include a structure that is freely rotatable at the center or approximate center of the spatial arrangement thereof. In a case in which the ligand includes a structure that is freely rotatable at the center or approximate center of the spatial arrangement thereof, cutting of a conduction network may occur in a situation in which an electrical storage device is formed using the complex. An example of such a "structure that is freely rotatable" is a phenylene group positioned at the center of spatial arrangement of terephthalic acid.

### [Number of hydration water molecules]

In the presently disclosed electrode material, the number of hydration water molecules per one transition metal ion in a unit structure of the complex may be 0.56 or less, preferably 0.50 or less, and more preferably 0.47 or less. Moreover, the complex may not contain hydration water. Note that "hydration water" refers to water that is bonded to a transition metal ion via a chemical interaction such as a coordinate bond in the complex. When the number of hydration water molecules per one transition metal ion in the unit structure of the complex is not more than any of the upper limits set forth above, it is possible to inhibit the electrode material readily eluting into an electrolyte solution due to the complex in a situation in which the electrode material containing the complex is used as an electrode active material of an electrical storage device. As a result, deterioration of cycle characteristics of the electrical storage device can be more effectively inhibited even in a situation in which the temperature of the electrical storage device itself repeatedly rises and falls during repeated charging and discharging of the electrical storage device.

Note that in the case of typical transition metal ion-containing metal complexes that are conventionally known, the number of hydration water molecules per one transition metal ion in the unit structure thereof is significantly more than 0.56, and is normally approximately 2 or more. As a result of diligent investigation, the inventor discovered that when a metal complex including a large number of hydration water molecules per one transition metal ion is used as an electrode active material, the electrode active material readily dissolves in high-polarity organic solvents. It is thought that for this reason, it has not been possible to sufficiently enhance cycle characteristics of an electrical storage device having a high-polarity organic solvent as an electrolyte medium in a situation in which a conventional metal complex has been used in the electrical storage device.

### [Crystallinity]

The complex contained in the presently disclosed electrode material is preferably crystalline. When the electrode material is crystalline, it is possible to increase the heat resistance of an electrical storage device obtained by using the electrode material as an electrode material of the electrical storage device. Note that it is possible to judge whether or not an electrode material is crystalline by a method described in the EXAMPLES section of the present disclosure.

### [Average particle diameter]

The average particle diameter of the complex contained in the presently disclosed electrode material is preferably 0.1 µm or more, and is preferably 31 µm or less, and more preferably 30 µm or less. When the average particle diameter of the complex is not more than any of the upper limits set forth above, cycle characteristics of an electrical storage device including an electrode that contains the complex can be further improved. Note that the average particle diameter of the complex is the volume-average particle diameter D50 in accordance with JIS Z 8825 (laser diffraction).

### [Production method of complex]

The complex can be produced by mixing a transition metal-containing compound serving as a source of a transition metal ion such as described above and a redox compound serving as a source of a ligand such as described above (mixing step). The transition metal-containing compound can be any compound without any specific limitations so long as it can serve as a source of a transition metal ion such as described above. Specifically, a salt including a transition metal may be used as the transition metal-containing compound. The salt including a transition metal may, for example, be a sulfate, chloride, nitrate, formate, acetate, hydroxide, oxide, bromate, or the like of a transition metal. In particular, the transition metal-containing compound is preferably copper(I) chloride anhydrate or dihydrate, copper(II) chloride, copper(II) acetate monohydrate, copper sulfate pentahydrate, iron(II) chloride tetrahydrate, iron(III) chloride hexahydrate, iron(II) sulfate heptahydrate, manganese(II) chloride tetrahydrate, manganese(II) sulfate hydrate, nickel(II) chloride hexahydrate, nickel(II) sulfate hexahydrate, or the like. The redox compound can be any compound without any specific limitations other than being able to supply the previously described ligand.

In production of the presently disclosed electrode material, it is preferable that a drying step of drying reacted material obtained through the mixing step is performed. The drying step is preferably performed under an atmosphere and temperature conditions such that the number of hydration water molecules per one transition metal ion in a unit structure of the electrode material obtained through the drying step is not more than a certain value. Specifically, the "certain value" may be 0.56 or less, preferably 0.50 or less, and more preferably 0.47 or less. The drying step may be a heated vacuum drying step, for example. The heating temperature during vacuum drying may be 110°C or higher, preferably higher than 110°C, and more preferably 120°C or higher, and is normally lower than the decomposition temperature of the electrode material itself. The drying time during vacuum drying may be not less than 10 minutes and not more than 24 hours, for example. Note that the term "vacuum" as used in the present specification refers to an atmosphere of 100 Pa or less.

### (Slurry composition)

The presently disclosed slurry composition contains the electrode material set forth above, either or both of a cellulosic polymer and a polyether polymer, and any solvent, such as water or any organic solvent, and optionally further contains other components. An electrode formed using the slurry composition can cause an electrical storage device to display excellent cycle characteristics. The presently disclosed slurry composition can suitably be used in production of various types of electrodes that can be included in electrical storage devices. More specifically, the presently disclosed slurry composition can suitably be used to produce a positive electrode and a negative electrode in the case of an electrical storage device that is a secondary battery and can suitably be used to produce an anode and a cathode in the case of an electrical storage device that is a capacitor. In particular, the presently disclosed slurry composition can suitably be used to form a positive electrode in the case of an electrical storage device that is a secondary battery.

The cellulosic polymer may be a cellulosic polymer such as carboxymethyl cellulose (CMC), hydroxypropyl methylcellulose (HPMC), or a salt thereof. The polyether polymer may be a polyether polymer that includes one type or a plurality of types of monomer units from among an ethylene oxide (EO) unit, a propylene oxide (PO) unit, an epichlorohydrin (ECH) unit, an oligo(ethylene glycol) glycidyl ether (EM) unit, an oligo(propylene glycol) glycidyl ether (PM) unit, an allyl glycidyl ether (AGE) unit, and the like. Note that although the polyether polymer may include other units besides the units described above, the proportion constituted by other units is preferably 10 mass% or less when all monomer units of the polymer are taken to be 100 mass%. Units such as described above can be formed by using known compounds including these units to carry out a polymerization reaction by a standard method. Note that other compounds that are copolymerizable with the various compounds and that do not include the units described above may optionally be used in the polymerization reaction.

One type of polymer may be used individually as the cellulosic polymer and the polyether polymer, or two or more types of polymers may be used in combination in a freely selected ratio as the cellulosic polymer and the polyether polymer. In particular, CMC, polyethylene oxide (PEO), and EO-PO-AGE copolymer are preferable.

Examples of other components that can be used include, but are not specifically limited to, known binders such as fluororesins (polytetrafluoroethylene (PTFE), tetrafluoroethylene-hexafluoropropylene copolymer (FEP), etc.), polyvinyl alcohol (PVA), and rubbers (styrene-butadiene rubber (SBR), acrylic acid-modified SBR resin (SBR latex), etc.), and known additives such as acetylene black and other such conductive additives. The amounts of these components in the slurry composition can be within typical ranges without any specific limitations.

The presently disclosed slurry composition can be produced by, without any specific limitations, mixing the presently disclosed electrode material, either or both of a cellulosic polymer and a polyether polymer, and other optionally used components in the presence of a solvent.

### (Electrode)

The presently disclosed electrode contains the electrode material set forth above as an active material. As a result of the presently disclosed electrode containing any one of the electrode materials set forth above, the presently disclosed electrode can enhance cycle characteristics of an electrical storage device. In the presently disclosed electrode, the number of hydration water molecules per one transition metal ion in a unit structure of the complex contained in the electrode is preferably 0.50 or less. When the number of hydration water molecules per one transition metal ion in the complex contained in the electrode is small with a value of 0.50 or less, cycle characteristics of an electrical storage device that includes the electrode can be further enhanced. Note that the "number of hydration water molecules per one transition metal ion of the complex contained in the electrode" can be calculated by a method described in the EXAMPLES section. In a case in which the amount of the complex that is contained in the electrode is unknown, the content of the complex can be determined by decomposing the electrode using an acidic solution or an alkaline solution, and then analyzing and quantifying a metal and/or ligand in the resultant decomposition product.

The number of hydration water molecules per one transition metal ion contained in the complex used as the electrode material and the number of hydration water molecules per one transition metal ion in the complex contained in the electrode may differ as a result of drying treatment or the like in an electrode formation step. For example, in the case of an electrode material in which the number of hydration water molecules per one transition metal ion in the unit structure of the complex is more than 0.50 at an electrode material stage, the number of hydration water molecules per one transition metal ion in the unit structure of the complex may be 0.50 or less in the electrode. The number of hydration water molecules per one transition metal ion in the unit structure of the complex contained in the obtained electrode can be controlled by adjusting drying treatment conditions or the like in an electrode formation step.

The presently disclosed electrode can be any of various types of electrodes that can be included in electrical storage devices. In particular, a positive electrode is preferably the presently disclosed electrode in the case of an electrical storage device that is a secondary battery.

The presently disclosed electrode may include an electrode mixed material layer that contains the electrode material set forth above as an active material. Note that the electrode may optionally include a substrate having the electrode mixed material layer at the surface thereof, and this substrate may be a current collector formed of a metal material such as aluminum, an aluminum alloy, copper, stainless steel, or nickel in a case in which the presently disclosed electrode is a positive electrode for a secondary battery or a capacitor. The electrode mixed material layer preferably contains either or both of a cellulosic polymer and a polyether polymer in addition to the presently disclosed electrode material serving as an active material. Any of the same cellulosic polymers and polyether polymers as listed in the "Slurry composition" section can suitably be contained as the cellulosic polymer and the polyether polymer. Moreover, the electrode mixed material layer may optionally contain other components such as binders, conductive additives, and other additives such as mentioned in the "Slurry composition" section. The presently disclosed electrode can be well formed by applying the presently disclosed slurry composition set forth above onto a substrate and drying the slurry composition on the substrate, but the production method of the presently disclosed electrode is not limited thereto. For example, the presently disclosed electrode can be well formed by mixing components of an electrode mixed material layer in a solid state and then performing shaping thereof by a known method such as pressing.

### (Electrical storage device)

A feature of the presently disclosed electrical storage device is that it includes the presently disclosed electrode and an electrolyte. The presently disclosed electrical storage device has excellent cycle characteristics as a result of including an electrode that contains an electrode material such as previously described. The term "electrolyte" as used in the present specification refers to a constituent that performs a function of transmitting ions between electrodes of an electrical storage device. Note that an electrolyte solution obtained by dissolving a supporting electrolyte in a solvent, a solid electrolyte formed of an organic or inorganic solid component, or a plasticized polymer electrolyte obtained by dispersing a supporting electrolyte in a plasticized polymer component can be adopted as the "electrolyte" of the presently disclosed electrical storage device.

The presently disclosed electrical storage device preferably includes a counter electrode of the presently disclosed electrode, and the counter electrode preferably contains one type of metal or an alloy including a plurality of types of metals. The metal or alloy may be a metal material such as lithium, sodium, potassium, magnesium, calcium, aluminum, or an alloy thereof, for example. The counter electrode preferably includes a metal foil obtained by shaping any of these metal materials into a sheet shape. The thickness of the metal foil is preferably not less than 1 µm and not more than 300 µm. Note that the electrode may optionally include a substrate that supports an alloy layer, and the substrate may be a current collector formed of a metal material such as aluminum, an aluminum alloy, copper, stainless steel, or nickel.

### <Electrolyte>

The electrolyte is preferably an electrolyte that does not dissolve the electrode material. Suitable examples of the electrolyte include (1) an organic electrolyte solution having specific properties, (2) a plasticized polymer electrolyte, (3) an organic solid electrolyte, (4) an inorganic solid electrolyte, (5) an ionic liquid electrolyte solution, and (6) an aqueous electrolyte solution. Note that an electrolyte that "does not dissolve" the electrode material referred to in the present specification is an electrolyte that is a solid at 25°C and standard atmospheric pressure (i.e., a solid electrolyte); an electrolyte that is a liquid under the aforementioned conditions and for which a judgment of "No" is made when solubility of the electrode material is confirmed by a method described in the EXAMPLES section of the present specification; or an electrolyte that is a plasticized polymer electrolyte and in which the content of a plasticizer is 40 mass% or less when the total mass of the plasticized polymer electrolyte is taken to be 100 mass%. More specifically, an electrolyte of (1), (5), or (6) for which a judgment of "No" is made for solubility when solubility of the electrode material is confirmed by the method described in the EXAMPLES section of the present specification, an electrolyte of (2) in which the content of a plasticizer is not more than a specific upper limit, or an electrolyte of (3) or (4) corresponds to an "electrolyte that does not dissolve the electrode material". The following describes each of these types of electrolytes in detail.

Examples of supporting electrolytes that can be contained in the electrolyte include lithium salts such as Li₂SO₄, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, Li(CF₃SO₂)₂N (hereinafter, also referred to as "LiTFSI"), (F₃SO₂)₂NLi (hereinafter, also referred to as "LiFSI"), and (C₂F₅SO₂)NLi; magnesium salts such as MgCl₂, MgBr₂, Mg(BF₄)₂, Mg(CF₃SO₃)₂, and Mg(N(CF₃SO₂)₂)₂ (hereinafter, also referred to as "Mg(TFSI)₂"); Al(PF₆)₃, Al(BF₄)₃, AlCl₃, Al((CF₃SO₂)₂N)₃ (hereinafter, also referred to as "AlTFSI"), (C₂H₅)₄NBF₄, and (C₄H₉)₄NBF₄. One of these supporting electrolytes may be used individually, or two or more of these supporting electrolytes may be used as a mixture.

### (1) Organic electrolyte solution having specific properties

The organic electrolyte solution is an electrolyte solution that contains an organic solvent and a supporting electrolyte. The proportional content of a polymer component having a weight-average molecular weight of 10,000 or more in the organic electrolyte solution can be less than 30 mass%, for example, from a viewpoint of fluidity of the electrolyte solution. The organic electrolyte solution may be (α) an organic electrolyte solution that has a supporting electrolyte concentration of 2.5 M or more and that does not correspond to (β) described hereafter, (β) an organic electrolyte solution in which a low molecular weight compound that is a solid at 5°C constitutes 70 mass% or more of components other than the supporting electrolyte, (γ) an organic electrolyte solution that has a supporting electrolyte concentration of less than 2.5 M and that does not correspond to (β), or the like. Examples of solvents that can be contained in the organic electrolyte solution include, without any specific limitations, any solvent in which a supporting electrolyte such as described above can dissolve. For example, water, a carbonate such as dimethyl carbonate (DMC), ethylene carbonate (EC), diethyl carbonate (DEC), propylene carbonate (PC), butylene carbonate (BC), or ethyl methyl carbonate (EMC), a lactone such as γ-butyrolactone (GBL), an ester such as ethyl propionate (EP), a phosphoric acid ester such as trimethyl phosphate (TMP) or triethyl phosphate (TEP), acetonitrile, or the like can suitably be used. Furthermore, a mixture of such solvents may be used.

An organic electrolyte solution that satisfies (α) (hereinafter, also referred to as "organic electrolyte solution (α)") can be produced by dissolving a supporting electrolyte such as described above in a solvent such as described above such that the concentration of the supporting electrolyte in the solution is 2.5 M or more, and preferably 3.5 M or more. When the concentration of the supporting electrolyte in the organic electrolyte solution is 2.5 M or more, the electrode material can be made insoluble therein. The constituent solvent of the organic electrolyte solution (α) is preferably a solvent including dimethyl carbonate or a mixed solvent of ethylene carbonate (EC) and diethyl carbonate (DEC). In a case in which the organic electrolyte solution (α) includes ethylene carbonate (EC), the content ratio of EC in the organic electrolyte solution (α) is preferably less than 70 mass% when components other than the supporting electrolyte are taken to be 100 mass%.

The "low molecular weight compound that is a solid at 5°C" that can be contained in an organic electrolyte solution satisfying (β) (hereinafter, also referred to as "organic electrolyte solution (β)") is a low molecular weight compound having a molecular weight of 1,000 or less and is a compound that is present as a solid under conditions of standard atmospheric pressure and 5°C. Specifically, the "low molecular weight compound that is a solid at 5°C" may be ethylene carbonate (EC), which was also listed as a solvent that can be contained in an organic electrolyte solution. The content ratio of the low molecular weight compound that is a solid at 5°C in the organic electrolyte (β) is preferably 75 mass% or more when components other than the supporting electrolyte are taken to be 100 mass%.

### (2) Plasticized polymer electrolyte

The plasticized polymer electrolyte is an electrolyte that is formed of a plasticized polymer compound having a weight-average molecular weight of 10,000 or more and may further contain a low molecular weight organic compound having a molecular weight of 1,000 or less. The proportional content of the low molecular weight organic compound having a molecular weight of 1,000 or less in the plasticized polymer electrolyte is preferably not less than 1 part by mass and not more than 150 parts by mass when the content of the polymer compound having a weight-average molecular weight of 10,000 or more is taken to be 100 parts by mass. Moreover, the content of the low molecular weight organic compound in the plasticized polymer electrolyte is preferably 40 mass% or less when the total mass of the plasticized polymer electrolyte is taken to be 100 mass%. Furthermore, the content of the polymer compound in the plasticized polymer electrolyte is preferably 30 mass% or more when the total mass of the plasticized polymer electrolyte is taken to be 100 mass%.

Note that the contents of a low molecular weight organic compound and a polymer component in a plasticized polymer electrolyte can be measured by liquid chromatography. The low molecular weight organic compound may be a solvent such as mentioned in the "(1) Organic electrolyte solution having specific properties" section, a dinitrile such as succinonitrile, or the like. The polymer component of the plasticized polymer electrolyte is not specifically limited and may be a polyether polymer. Any of the same polymers as the polyether polymers that can be contained in the presently disclosed slurry composition can be used as the polyether polymer.

Moreover, a supporting electrolyte such as previously described can be used as a supporting electrolyte contained in the plasticized polymer electrolyte. The concentration of the supporting electrolyte can be freely set.

### (3) Organic solid electrolyte

The organic solid electrolyte is an electrolyte that is obtained by dispersing a supporting electrolyte in a polymer component and that has a solid form at 25°C and standard atmospheric pressure. Any of the same polymers as the polyether polymers that can be contained in the presently disclosed slurry composition can be used as the polymer component in the same manner as for a plasticized polymer electrolyte. Moreover, a supporting electrolyte such as previously described can be used as the supporting electrolyte. The organic solid electrolyte can be produced by a known method. For example, the organic solid electrolyte can be obtained by heating and mixing a polymer component, a supporting electrolyte, and a solvent, and subsequently drying the resultant mixture. Examples of solvents that can be used include organic solvents such as tetrahydrofuran. The temperature during heating and mixing can be set in a typical temperature range. Moreover, a method such as air drying or vacuum drying can be adopted as the drying method. Furthermore, the organic solid electrolyte can be produced by a known method in which a solvent is not used in a case in which the supporting electrolyte dissolves directly in the polymer component.

### (4) Inorganic solid electrolyte

The inorganic solid electrolyte may be a known inorganic solid electrolyte having a solid form at 25°C and standard atmospheric pressure, for example. Specifically, the inorganic solid electrolyte may be a sulfide solid electrolyte material. Although the sulfide solid electrolyte material may be a material that includes bridging sulfur or a material that does not include bridging sulfur, a sulfide solid electrolyte that does not include bridging sulfur is preferable. The sulfide solid electrolyte that does not include bridging sulfur may be a Li₂S-P₂S₅ material, a Li₂S-SiS₂ material, a Li₂S-GeS₂ material, or a Li₂S-Al₂S₃ material.

The inorganic solid electrolyte can be molded into a layer form by, for example, pulverizing and mixing the aforementioned material by a method such as mechanical mixing in which the material is mixed while mechanical energy is imparted thereto to cause amorphization, and then performing pressing thereof. An inorganic solid electrolyte having a layer form can be produced through such operations.

### (5) Ionic liquid electrolyte solution

The ionic liquid electrolyte solution is an electrolyte solution that contains an ionic liquid formed of a cation part and an anion part. The cation part may be an alkylimidazolium ion such as a dimethylimidazolium ion, an ethylmethylimidazolium ion, or a diethylimidazolium ion; an alkylpyridinium ion such as a propylpyridinium ion, an isopropylpyridinium ion, or a butylpyridinium ion; an alkylammonium ion such as a tetraethylammonium ion, a tributylmethylammonium ion, a hexyltrimethylammonium ion, or a diethylmethyl(2-methoxyethyl)ammonium ion; an alkylphosphonium ion such as a tetramethylphosphonium ion or a tetrabutylphosphonium ion; or the like. The anion part may be a tetrafluoroborate ion, a hexafluorophosphate ion, a chloride ion, a bromide ion, an iodide ion, a trifluoromethanesulfonate ion, a hexafluoroarsenate ion, a nitrate ion, a perchlorate ion, a bistrifluoromethanesulfonimide ion, or the like. One of these ionic liquids may be used individually, or two or more of these ionic liquids may be used as a mixture. Moreover, the cation part may, for example, be an equimolar complex of a glyme such as triethylene glycol dimethyl ether (hereinafter, also referred to as "triglyme") or tetraethylene glycol dimethyl ether (hereinafter, also referred to as "tetraglyme") and a lithium salt or the like. Furthermore, the anion part can be a bis(trifluoromethylsulfonyl)imide or bis(fluorosulfonyl)imide anion (FSI). The ionic liquid electrolyte can be produced by, for example, mixing LiTFSI, LiFSI, Mg(TFSI)₂, or the like of the previously listed supporting electrolytes and a glyme such that the molar ratio of the cation part and the anion part contained therein is 1:1. For example, in an ionic liquid obtained by mixing LiTFSI and tetraglyme in a 1:1 molar ratio, tetraglyme molecules are coordinated with Li⁺ cations in a 1:1 ratio to form complex cations. On the other hand, the anion [TFSI]⁻ is present in an equimolar amount to the complex cations in the same ionic liquid. In this manner, the ionic liquid electrolyte solution can contain complex cations and anions. Besides these complex cations and anions, a low viscosity solvent such as 1,1,2,2-tetrafluoroethyl-2,2,3,3-tetrafluoropropyl ether or another fluorine-substituted alkyl ether compound may be mixed into the ionic liquid electrolyte solution.

### (6) Aqueous electrolyte solution

The aqueous electrolyte solution is an electrolyte solution that is obtained by dispersing a supporting electrolyte such as previously described in water such as deionized water or ultrapure water.

Note that the content ratio of the supporting electrolyte in the organic electrolyte solution of (β) in (1) and each of the electrolytes or electrolyte solutions according to (2) to (6) may be freely set and can, for example, be less than 2.5 M.

The electrical storage device further includes a separator. Known microporous membranes that can be used in electrical storage devices can be used without any specific limitations as the separator of an electrical storage device in which a liquid electrolyte (i.e., an electrolyte solution) such as described in (1), (5), or (6) is adopted. Moreover, a separator formed using a photocurable resin that can be cured by irradiation with ultraviolet light or the like, for example, can be used as a separator of an electrical storage device in which a plasticized polymer electrolyte such as described in (2) or an organic solid electrolyte such as described in (3) is adopted. More specifically, by mixing a photocurable resin during formation of an electrolyte layer that is formed of a plasticized polymer electrolyte or an organic solid electrolyte, it is possible to obtain an electrolyte layer that can also function as a separator.

The electrical storage device can be produced by a known method in accordance with the type of electrolyte and the types of electrodes that are used. In the case of an electrical storage device in which a liquid electrolyte (i.e., an electrolyte solution) such as described in (1), (5), or (6) is adopted, for example, the electrical storage device can be produced by performing rolling, folding, or the like of a positive electrode, a negative electrode, and a separator in accordance with the battery shape as necessary, placing the resultant product in a battery container, injecting the electrolyte solution into the battery container, and sealing the battery container. In order to prevent pressure increase inside the electrical storage device and occurrence of overcharging or overdischarging, an overcurrent preventing device such as a fuse or a PTC device, an expanded metal, or a lead plate may be provided as necessary. The shape of the electrical storage device may be a coin type, button type, sheet type, cylinder type, prismatic type, flat type, or the like.

Moreover, in the case of an electrical storage device in which a plasticized polymer electrolyte such as described in (2), an inorganic solid electrolyte such as described in (4), or an organic solid electrolyte such as described in (3) is adopted, the electrical storage device can be produced by stacking a positive electrode, a negative electrode, and a separator, arranging the resultant laminate inside a casing of a desired shape, and sealing the casing.

### EXAMPLES

The following provides a more specific description of the present disclosure based on examples. However, the present disclosure is not limited to the following examples. In the following description, "%" and "parts" used in expressing quantities are by mass, unless otherwise specified. Moreover, the term "room temperature" as used in the following description refers to 25°C.

In the examples and comparative examples, the average particle diameter of an electrode material, the number of hydration water molecules per one transition metal ion contained in an electrode material, the chemical composition of an electrode material, the crystallinity of an electrode material, the solubility of an electrode material in an electrolyte, and the discharge capacity and capacity maintenance rate of an electrical storage device were each measured or evaluated as described below. Moreover, synthesis methods of electrode materials in the examples and comparative examples were in accordance with Synthesis Examples 1 to 9, described below. Furthermore, production methods of electrolytes were in accordance with Production Examples A to I, described below.

### <Average particle diameter of electrode material>

The average particle diameter of an electrode material obtained according to each synthesis example was measured in accordance with JIS Z 8825. Note that in a particle diameter distribution (by volume) obtained through this measurement, the particle diameter (D50) at which cumulative volume calculated from a small diameter end of the distribution reached 50% was taken to be the average particle diameter.

### <Number of hydration water molecules per one transition metal ion>

### [Electrode material]

In measurement of the number of hydration water molecules of an electrode material at a material stage prior to formation of an electrode, the loss on heating due to water of an electrode material obtained in each example or comparative example was first measured by thermogravimetric analysis. The obtained measurement value was then divided by the number of metal atoms per unit structure of the electrode material obtained in the example or comparative example, and the resultant value was taken to be the "number of hydration water molecules per one transition metal ion at the material stage".

Moreover, gas that evolved from the electrode material upon heating was analyzed by mass spectroscopy to confirm that the evolved gas had a mass number of 18 corresponding to a water molecule and thus confirm that the loss was due to water.

### [In electrode]

In measurement of the number of hydration water molecules of an electrode material in an electrode after electrode formation, an electrode produced in each example or comparative example was first heated in order to measure the loss on heating due to water. The obtained measurement value was then divided by the number of metal atoms per unit structure of the electrode material, and the resultant value was taken to be the "number of hydration water molecules per one transition metal ion in the electrode".

### <Identification of chemical composition and presence of crystallinity>

Powder X-ray diffraction was performed using a powder X-ray diffractometer (RINT2000 produced by Rigaku Corporation). An electrode material was evaluated as being crystalline in a case in which at least one diffraction peak that was not attributed to a raw material compound and had a full width at half maximum (FWHM) of 3° or less was displayed in the obtained diffraction chart.

### <Solubility of electrode material in electrolyte>

Solubility of an electrode material was confirmed in Examples 1 to 7, 10, 11, and 15 to 17 and Comparative Examples 1 and 2 in which an electrolyte solution was adopted as an electrolyte.

With regards to the combination of electrode material and electrolyte solution according to each of the examples and comparative examples in which an electrolyte solution was adopted as an electrolyte, the electrode material was added into the electrolyte solution and was immersed therein at room temperature for 24 hours in order to confirm solubility. A visual inspection of the electrolyte solution was made after 24 hours of immersion, and a judgment of "Yes" for solubility was made in a case in which coloring of the electrolyte solution was confirmed, whereas a judgment of "No" for solubility was made in a case in which coloring of the electrolyte solution was not confirmed. As a result, a judgment of "Yes" for solubility was made in Examples 1 and 2, whereas a judgment of "No" for solubility was made in all of the other examples and comparative examples.

### <Discharge capacity>

An electrical storage device obtained in each example or comparative example was repeatedly charged and discharged under conditions set such that the current density was 20 mA/g, and the discharge capacity of the electrical storage device was recorded. Note that evaluation was performed at 60°C in Example 9 and 100°C in Example 17 in which an electrolyte for which operation was not possible at room temperature was used, and was performed at room temperature in the other examples and comparative examples. The initial discharge capacity and the discharge capacity after 10 cycles are shown in Table 1.

The voltage range during measurement in each of the examples and comparative examples is also shown in Table 1.

### <Capacity maintenance rate>

The initial discharge capacity W₁ and the discharge capacity after 10 cycles Wio that were measured as described above were used to calculate a capacity maintenance rate by W₁₀/W₁ × 100(%).

Complexes used in the examples and comparative examples were synthesized according to the following synthesis examples. Note that the term "vacuum" in the operations described below refers to an atmosphere having a pressure of 100 Pa or less.

### (Synthesis Example 1)

A reaction of 3.5 g of rhodizonic acid dihydrate (17 mmol; Wako Pure Chemical Industries, Ltd.) and 3.39 g of copper(II) acetate monohydrate (17 mmol; Wako Pure Chemical Industries, Ltd.) was carried out in methanol. After this reaction, solvent and acetic acid obtained as a by-product were evaporated, and then vacuum drying was performed at 110°C for 8 hours to yield black copper rhodizonate powder (electrode material). With respect to the obtained electrode material, the number of hydration water molecules per one transition metal ion contained in the electrode material, the chemical composition of the electrode material, and the crystallinity of the electrode material were evaluated by the previously described methods. As a result, the chemical composition of the electrode material was determined to be C₆O₆Cu(II)·0.56H₂O. Moreover, the number of hydration water molecules per one transition metal ion was determined to be 0.56 from this chemical composition. Furthermore, a judgment of "Yes" was made for crystallinity.

### (Synthesis Example 2)

A reaction of 3.64 g of sodium rhodizonate (17 mmol; Wako Pure Chemical Industries, Ltd.) and 4.46 g of copper(II) sulfate pentahydrate (17.9 mmol; Wako Pure Chemical Industries, Ltd.) was carried out in 400 mL of deionized water for 24 hours. A precipitate present after the reaction was filtered off, was washed with water and acetone, and was then vacuum dried at 110°C for 8 hours to yield black copper rhodizonate powder (electrode material). With respect to the obtained electrode material, the number of hydration water molecules per one transition metal ion contained in the electrode material, the chemical composition of the electrode material, and the crystallinity of the electrode material were evaluated by the previously described methods. As a result, the chemical composition of the electrode material was determined to be C₆O₆Cu(II)·0.56H₂O. Moreover, the number of hydration water molecules per one transition metal ion was determined to be 0.56 from this chemical composition. Furthermore, a judgment of "Yes" was made for crystallinity.

### (Synthesis Example 3)

Black copper rhodizonate powder was obtained in the same way as in Synthesis Example 2 with the exception that the temperature during vacuum drying after the reaction was changed to 120°C. As a result of evaluation in the same manner as in Synthesis Example 2, the chemical composition of the obtained electrode material was determined to be C₆O₆Cu(II)-0.45H₂O. Moreover, the number of hydration water molecules per one transition metal ion was determined to be 0.45 from this chemical composition. Furthermore, a judgment of "Yes" was made for crystallinity.

### (Synthesis Example 4)

Black copper rhodizonate powder was obtained in the same way as in Synthesis Example 2 with the exception that the temperature during vacuum drying after the reaction was changed to 130°C. As a result of evaluation in the same manner as in Synthesis Example 2, the chemical composition of the obtained electrode material was determined to be C₆O₆Cu(II). Moreover, the electrode material having this chemical composition was an anhydrate and the number of hydration water molecules per one transition metal ion was 0. Furthermore, a judgment of "Yes" was made for crystallinity.

### (Synthesis Example 5)

Gradual addition under stirring of 40 mL of an aqueous solution in which 318.2 mg (1 mmol) of copper(II) sulfate pentahydrate (Kanto Chemical Co., Inc.) had been dissolved was performed with respect to a solution containing 120.2 mg (1 mmol) of rubeanic acid (Sigma-Aldrich) dissolved in 40 mL of ethanol that was held at 70°C, and a reaction thereof was carried out for 24 hours. A precipitate present after the reaction was filtered off, was washed with water and acetone, was vacuum dried at 80°C for 8 hours, and was then further heat treated at 120°C in an atmospheric pressure nitrogen atmosphere for 1 hour to yield black copper(II) rubeanate powder. As a result of evaluation in the same manner as in Synthesis Example 2, the chemical composition of the obtained electrode material was determined to be C₂N₂S₂H₂Cu(II)·1.3H₂O. Moreover, the number of hydration water molecules per one transition metal ion was determined to be 1.3 from this chemical composition. Furthermore, a judgment of "No" was made for crystallinity.

### (Synthesis Example 6)

Black copper(II) rubeanate powder was obtained in the same way as in Synthesis Example 5 with the exception that the temperature during vacuum drying after the reaction was changed to 130°C, and heat treatment was not performed after the vacuum drying. As a result of evaluation in the same manner as in Synthesis Example 2, the chemical composition of the obtained electrode material was determined to be C₂N₂S₂H₂Cu(II). Moreover, the number of hydration water molecules per one transition metal ion was determined to be 0 from this chemical composition. Furthermore, a judgment of "No" was made for crystallinity.

### (Synthesis Example 7)

After weighing 140.1 mg (1 mmol) of 2,5-dihydroxy-p-benzoquinone (Wako Pure Chemical Industries, Ltd.) and 83.9 g (2 mmol) of lithium hydroxide monohydrate (Wako Pure Chemical Industries, Ltd.) into a flask, 20 g of ultrapure water was added, and stirring was performed at room temperature for 1 hour to achieve complete dissolution. Next, 198.8 mg (1 mmol) of iron(II) chloride tetrahydrate (Wako Pure Chemical Industries, Ltd.) was added into the flask, and a further 24 hours of stirring was performed. A precipitate present after the reaction was filtered off, was washed with water and acetone, and was vacuum dried at 130°C for 8 hours to yield black dihydroxybenzoquinone iron(II). As a result of evaluation in the same manner as in Synthesis Example 2, the chemical composition of the obtained electrode material was determined to be C₆O₄H₂Fe(II). Moreover, the electrode material having this chemical composition was an anhydrate and the number of hydration water molecules per one transition metal ion was 0. Furthermore, a judgment of "Yes" was made for crystallinity.

### (Synthesis Example 8)

After weighing 114.1 mg (1 mmol) of squaric acid (Wako Pure Chemical Industries, Ltd.) and 83.9 g (2 mmol) of lithium hydroxide monohydrate (Wako Pure Chemical Industries, Ltd.) into a flask, 20 g of ultrapure water was added, and stirring was performed at room temperature for 1 hour to achieve complete dissolution. Next, 278 mg (1 mmol) of iron(II) sulfate heptahydrate (Wako Pure Chemical Industries, Ltd.) was added into the flask, and a further 24 hours of stirring was performed. A precipitate present after the reaction was filtered off, was washed with water and acetone, and was vacuum dried at 200°C for 8 hours to yield black iron(II) squarate powder. As a result of evaluation in the same manner as in Synthesis Example 2, the chemical composition of the obtained electrode material was determined to be C₄O₄Fe(II). Moreover, the electrode material having this chemical composition was an anhydrate and the number of hydration water molecules per one transition metal ion was 0. Furthermore, a judgment of "Yes" was made for crystallinity.

### (Synthesis Example 9)

After weighing 206 mg (1 mmol) of rhodizonic acid dihydrate (Alfa Aesar) and 73.9 mg (1 mmol) of lithium carbonate (Sigma-Aldrich) into a flask, 20 mL of ultrapure water was added, and stirring was performed for 12 hours to carry out a reaction. The reaction solution was subjected to 10 minutes of centrifugal separation at 8,000 rpm, and then a precipitate was washed with acetone and was vacuum dried at 200°C for 8 hours to yield lithium rhodizonate. As a result of evaluation in the same manner as in Synthesis Example 2, the electrode material was determined to have a chemical composition of Li(C₆O₆Li₂) and be anhydrous rhodizonic acid. Moreover, the electrode material having this chemical composition was an anhydrate and the number of hydration water molecules per one transition metal ion was 0. Furthermore, a judgment of "Yes" was made for crystallinity.

### (Production of electrolytes)

Electrolytes were produced according to Production Examples A to I, described below. The operations in production described below were all carried out inside an argon glove box in order to prevent contact with moisture.

### <Production Example A>

Ethylene carbonate and diethyl carbonate were weighed out with a mass ratio of 1:2 as a constituent solvent of an organic electrolyte solution and were mixed to obtain a homogeneous solution. LiPF₆ was added to the solution as a supporting electrolyte and was dissolved to produce an electrolyte A that was a 1 M organic electrolyte solution. The electrolyte A is an electrolyte solution corresponding to the previously described organic electrolyte solution (γ).

### <Production Example B>

Ethylene carbonate and diethyl carbonate were weighed out with a mass ratio of 8:2 as a constituent solvent of an organic electrolyte solution and were mixed to obtain a homogeneous solution. Note that ethylene carbonate is a low molecular weight compound (molecular weight: 88.06) that is a solid at 5°C under standard atmospheric pressure. LiTFSI was dissolved in the solution as a supporting electrolyte to produce an electrolyte B that was a 1 M organic electrolyte solution. The electrolyte B is an electrolyte solution corresponding to the previously described organic electrolyte solution (β).

### <Production Example C>

LiPF₆ as a supporting electrolyte was dissolved in dimethyl carbonate as a constituent solvent of an organic electrolyte solution to produce an electrolyte C that was a 4.5 M organic electrolyte solution. Note that the electrolyte C is an electrolyte solution corresponding to the previously described organic electrolyte solution (α).

### <Production Example D>

LiTFSI as a supporting electrolyte was dissolved in tetraglyme (tetraethylene glycol dimethyl ether) as a constituent solvent of an ionic liquid electrolyte solution with a molar ratio of 1:1 to obtain an ionic liquid. Next, 1,1,2,2-tetrafluoroethyl-2,2,3,3-tetrafluoropropyl ether was added with the aim of viscosity reduction in an amount such as to have a molar ratio of 4 relative to tetraglyme contained in the ionic liquid to produce an electrolyte D that was an ionic liquid electrolyte solution.

### <Production Example E>

Li₂SO₄ as a supporting electrolyte was dissolved in ultrapure water as a solvent to produce an electrolyte E that was a 1 M aqueous electrolyte solution.

### <Production Example F>

Mg(TFSI)₂ as a supporting electrolyte was dissolved in triglyme (triethylene glycol dimethyl ether) as a constituent solvent of an ionic liquid electrolyte solution to produce an electrolyte F that was a 4.5 M ionic liquid electrolyte solution.

### <Production Example G>

A polyether polymer including ethylene oxide, propylene oxide, and allyl glycidyl ether as polyether monomer units in a compositional ratio of 90:6:4 mol% and having a weight-average molecular weight of 900,000 was weighed out in an amount of 2 g as a polymer component and LiTFSI was weighed out in an amount of 600 mg as a supporting electrolyte component. Next, 40 cc of tetrahydrofuran (THF; molecular weight: 72.11; density: 0.8892 g/cm³) was added thereto as a solvent, and heating and mixing were performed at 40°C to cause dissolution and obtain a homogeneous organic electrolyte solution. The obtained solution was air dried to volatilize THF and was then vacuum dried to obtain, in a solid form, an electrolyte G that was an organic solid electrolyte.

### <Production Example H>

After weighing out 7 g of polyethylene oxide (Sigma-Aldrich) having a weight-average molecular weight of 1,000,000 as a polymer component, 6 g of LiTFSI as a supporting electrolyte component, and 7 g of ethylene carbonate (molecular weight: 88.06) as a plasticizer, these materials were mixed to cause dissolution and yield a homogeneous viscous solution. The obtained homogeneous viscous solution was a plasticized polymer electrolyte and is referred to below as electrolyte H.

### <Production Example I>

Lithium sulfide (Li₂S) and phosphorus pentasulfide (P₂S₅) were used as starting materials. These powders were weighed out in a glove box under an argon atmosphere such that Li₂S:P₂S₅ was 75:25 (molar ratio) and were mixed in an agate mortar to yield a raw material composition. Next, 1 g of the obtained raw material composition was loaded into a zirconia pot, zirconia balls (10 balls of 10 mm in diameter) were also loaded, and the pot was completely sealed. The pot was set in a planetary ball mill and then 40 hours of mechanical milling was performed at a rotation speed of 370 rpm. This yielded a sulfide solid electrolyte material (75Li₂S·25P₂S₅ glass). It was confirmed that bridging sulfur was not included in the obtained sulfide solid electrolyte material through Raman spectroscopy measurement thereof.

The sulfide solid electrolyte material was pressed with a pressure of 1 ton/cm² to form an electrolyte I (thickness: 400 µm) that was a solid electrolyte layer.

### (Example 1)

After mixing 100 parts of the electrode material obtained in Synthesis Example 1 as a positive electrode active material, 100 parts of acetylene black as a conductive additive, and 32 parts in terms of solid content of PTFE powder as a binder, these materials were kneaded in a mortar until they were homogeneous. The resultant compound was pressure bonded to aluminum foil of 20 µm in thickness serving as a current collector in a flat plate press to obtain a positive electrode having a positive electrode mixed material layer thickness of 20 µm. A lithium metal sheet of 200 µm in thickness was used as a negative electrode. Moreover, glass fiber filter paper of 260 µm in thickness was used as a separator. The positive electrode, the separator, and the negative electrode were each cut out as a circular shape and were stacked in this order. The resultant laminate was placed on a bottom part of a coin cell casing of 2032 size, the electrolyte A (1 M organic electrolyte solution) obtained according to Production Example A was injected into the coin cell casing, and then an upper part of the coin cell casing was overlapped and fixed in place to obtain a lithium ion secondary battery (electrical storage device). The discharge capacity and capacity maintenance rate of the obtained battery were evaluated by the previously described methods. The results are shown in Table 1.

### (Example 2)

A lithium ion secondary battery (electrical storage device) was obtained in the same way as in Example 1 with the exception that the electrode material obtained in Synthesis Example 2 was used as a positive electrode active material. The obtained battery was evaluated as previously described. The results are shown in Table 1.

### (Example 3)

A lithium ion secondary battery (electrical storage device) was obtained in the same way as in Example 1 with the exception that the electrode material obtained in Synthesis Example 3 was used as a positive electrode active material. The obtained battery was evaluated as previously described. The results are shown in Table 1.

### (Example 4)

In production of a positive electrode, 16 parts in terms of solid content of a water dispersion of styrene butadiene rubber (BM400B produced by ZEON CORPORATION) as a binder and 16 parts in terms of solid content of carboxymethyl cellulose (BSH-12 produced by DKS Co., Ltd.) were mixed, deionized water was added to adjust the solid content concentration to 35 mass%, and mixing and dispersing were performed to yield a slurry composition for an electrode mixed material layer. The obtained slurry composition was applied onto aluminum foil of 20 µm in thickness serving as a current collector and was dried to obtain a positive electrode having a positive electrode mixed material layer thickness of 20 µm. Vacuum drying of the electrode was performed once more under the same drying conditions as in synthesis of the positive electrode active material to be on the safe side since the active material and water were brought into contact during electrode production. With the exception of these points, a lithium ion secondary battery (electrical storage device) was obtained in the same way as in Example 3. The obtained battery was evaluated as previously described. The results are shown in Table 1.

### (Examples 5 to 7)

A lithium ion secondary battery (electrical storage device) was obtained in the same way as in Example 4 with the exception that the electrolyte (B) (electrolyte solution corresponding to organic electrolyte solution (β)) obtained according to Production Example B (Example 5), the electrolyte C (electrolyte solution corresponding to organic electrolyte solution (α)) obtained according to Production Example C (Example 6), or the electrolyte D (ionic liquid electrolyte solution) obtained according to Production Example D (Example 7) was used as an electrolyte. The obtained battery was evaluated as previously described. The results are shown in Table 1.

### (Example 8)

The electrolyte I (solid electrolyte layer) obtained according to Production Example I was used as an electrolyte. A mixed material obtained by mixing 100 parts of the electrode material obtained in Synthesis Example 3 as a positive electrode active material, 100 parts of acetylene black as a conductive additive, and 130 parts of a sulfide solid electrolyte material obtained according to Production Example I was first provided on the electrolyte I (solid electrolyte layer) and was pressed with a pressure of 1 ton/cm² to form a positive electrode mixed material layer (positive electrode). Note that in the present example, a sulfide solid electrolyte material obtained according to Production Example I was used instead of using a material corresponding to a binder for a positive electrode in formation of the positive electrode.

A Li-In alloy of 200 µm in thickness was provided as a negative electrode on a surface at the opposite side of the electrolyte I (solid electrolyte layer), and the resultant product was assembled into a coin cell casing of 2032 size to obtain a lithium ion secondary battery (electrical storage device). The obtained battery was evaluated as previously described. The results are shown in Table 1.

### (Example 9)

The electrolyte G (organic solid electrolyte) obtained according to Production Example G was used as an electrolyte. First, 100 parts of the electrode material obtained in Synthesis Example 3 as a positive electrode active material, 100 parts of acetylene black as a conductive additive, and 120 parts of the electrolyte G obtained according to Production Example G were weighed out and were mixed under heating until they were homogeneous to obtain a compound. The obtained compound was pressure bonded to aluminum foil of 20 µm in thickness to obtain a positive electrode having a positive electrode mixed material layer thickness of 20 µm. Note that in the present example, the electrolyte G was used instead of using a material corresponding to a binder for a positive electrode in formation of the positive electrode. A lithium metal sheet of 200 µm in thickness was used as a negative electrode.

Moreover, 1 part of an ultraviolet cross-linker (IRGACURE® 651 (IRGACURE is a registered trademark in Japan, other countries, or both) produced by BASF) was added to 100 parts of the electrolyte G, and these materials were shaped into the form of a film and were then irradiated with ultraviolet light to obtain a cross-linked polymer electrolyte film separator of 20 µm in thickness.

The positive electrode, the separator, and the negative electrode obtained as described above were used to obtain a laminate that was then assembled into a coin cell casing of 2032 size in the same way as in Example 1 to obtain a lithium ion secondary battery (electrical storage device). The obtained battery was evaluated as previously described. The results are shown in Table 1.

### (Example 10)

A lithium ion secondary battery (electrical storage device) was obtained in the same way as in Example 1 with the exception that 100 parts of the electrode material obtained in Synthesis Example 4 was used as a positive electrode active material. The obtained battery was evaluated as previously described. The results are shown in Table 1.

### (Example 11)

A lithium ion secondary battery (electrical storage device) was obtained in the same way as in Example 1 with the exception that 100 parts of the electrode material obtained in Synthesis Example 2 was used as a positive electrode active material, and the electrode was dried at 130°C. The obtained battery was evaluated as previously described. The results are shown in Table 1.

### (Example 12)

A lithium ion secondary battery (electrical storage device) was obtained in the same way as in Example 9 with the exception that the electrode material obtained in Synthesis Example 5 was used as a positive electrode active material, the electrolyte H (plasticized polymer electrolyte) was used as a binder for a positive electrode, and 260 µm glass fiber filter paper impregnated with the electrolyte H was used as a separator. The obtained battery was evaluated as previously described. The results are shown in Table 1.

### (Example 13)

A lithium ion secondary battery (electrical storage device) was obtained in the same way as in Example 12 with the exception that the electrode material obtained in Synthesis Example 6 was used as a positive electrode active material. The obtained battery was evaluated as previously described. The results are shown in Table 1.

### (Example 14)

A lithium ion secondary battery (electrical storage device) was obtained in the same way as in Example 13 with the exception that the electrode material obtained in Synthesis Example 7 was used as a positive electrode active material. The obtained battery was evaluated as previously described. The results are shown in Table 1.

### (Example 15)

A lithium ion secondary battery (electrical storage device) was obtained in the same way as in Example 4 with the exception that the electrode material obtained in Synthesis Example 8 was used as a positive electrode active material. The obtained battery was evaluated as previously described. The results are shown in Table 1.

### (Example 16)

An electric double-layer capacitor was produced as an electrical storage device.

An electrode was produced in the same way as in Example 1 with the exception that the electrode material obtained in Synthesis Example 6 was used as an active material. For a counter electrode, a slurry composition was obtained by mixing 50 parts of activated carbon powder (RP-20 produced by Kuraray Chemical Co., Ltd.), which is steam activated carbon having phenolic resin with a volume-average particle diameter of 15 µm as a raw material, and 50 parts of activated carbon powder (YP-17 produced by Kuraray Chemical Co., Ltd.), which is steam activated carbon having coconut shell carbon with a volume-average particle diameter of 15 µm as a raw material, as electrode active materials, 1.4 parts of solid content of a 1.5% aqueous solution of carboxymethyl cellulose (DN-800H produced by Daicel Corporation) as a dispersant, 5 parts of acetylene black (DENKA BLACK powder produced by Denka Company Limited) as a conductive material, 5.6 parts of solid content of a 40% water dispersion of a cross-linked acrylate polymer having a number-average particle diameter of 0.12 µm and a glass-transition temperature of -5°C as a binder, and deionized water such that the total solid content concentration was 20%. The obtained slurry composition was applied onto aluminum foil of 20 µm in thickness serving as a current collector and was dried to obtain a counter electrode having a mixed material layer thickness of 20 µm. The electrolyte E (1 M aqueous electrolyte solution) obtained according to Production Example E was used as an electrolyte. With the exception of these points, the same operations as in Example 1 were performed to obtain an electric double-layer capacitor (electrical storage device). The obtained electric double-layer capacitor was evaluated as previously described. The results are shown in Table 1.

### (Example 17)

A magnesium ion secondary battery was produced as an electrical storage device.

The electrode material obtained in Synthesis Example 6 was used as a positive electrode active material. Moreover, AZ31 alloy (alloy having Mg as a main component) of 200 µm in thickness was used as a negative electrode. Furthermore, the electrolyte F (4.5 M ionic liquid electrolyte solution) obtained according to Production Example F was used as an electrolyte. With the exception of these points, a magnesium ion secondary battery (electrical storage device) was obtained in the same way as in Example 1. The obtained magnesium ion secondary battery was evaluated as previously described. The results are shown in Table 1.

### (Comparative Examples 1 and 2)

A lithium ion secondary battery (electrical storage device) was obtained in the same way as in Example 1 with the exception that copper(II) terephthalate trihydrate (Comparative Example 1) or the electrode material obtained in Synthesis Example 9 (Comparative Example 2) was used as a positive electrode active material. The obtained battery was evaluated as previously described. The results are shown in Table 1.

In the table:
"PTFE" indicates polytetrafluoroethylene;
"CMC" indicates carboxymethyl cellulose;
"SBR" indicates styrene butadiene rubber;
"EO" indicates ethylene oxide;
"PO" indicates propylene oxide;
"AGE" indicates allyl glycidyl ether;
"PEO" indicates polyethylene oxide;
"LIB" indicates lithium ion secondary battery;
"EDLC" indicates electric double-layer capacitor; and
"MgIB" indicates magnesium ion secondary battery.

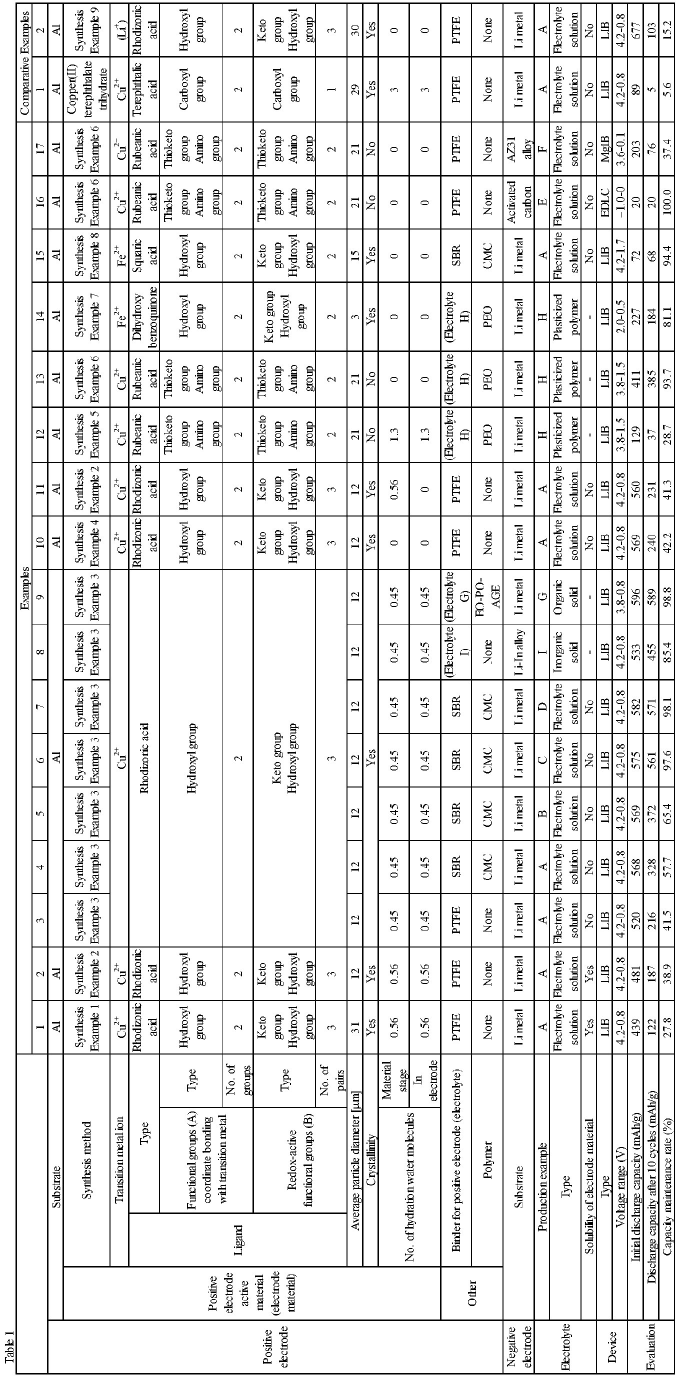

It can be seen from Table 1 that the lithium ion secondary batteries of Examples 1 to 15 in which at least one type of transition metal ion and a ligand including at least two functional groups (A) that can coordinate with the transition metal ion and at least two conjugate pairs of functional groups (B) that are redox active were used had excellent cycle characteristics. In the case of the electric double-layer capacitor of Example 16, it is to be expected that a relatively small discharge capacity will be obtained compared to the other examples that were in the form of a battery, and a smaller discharge capacity value than the other examples was actually obtained. However, this discharge capacity value was a sufficiently high discharge capacity value for a case in which an electrical storage device in the form of a conventional capacitor is envisaged. Moreover, the electric double-layer capacitor of Example 16 had a capacity maintenance rate of 100%, which is an exceptionally good capacity maintenance rate. It can also be seen that the magnesium ion secondary battery of Example 17 had excellent cycle characteristics.

On the other hand, it can be seen that an electrical storage device having excellent cycle characteristics was not obtained in Comparative Example 1 in which a pair of functional groups (B) that are redox active was not included and in Comparative Example 2 in which the electrode material did not contain a transition metal ion.

### INDUSTRIAL APPLICABILITY

According to the present disclosure, it is possible to provide an electrode material that can provide an electrical storage device having excellent cycle characteristics when used as an electrode material of the electrical storage device.

Moreover, according to the present disclosure, it is possible to provide an electrode with which an electrical storage device having excellent cycle characteristics can be formed and a slurry composition that can be used to produce the electrode.

Furthermore, according to the present disclosure, it is possible to provide an electrical storage device having excellent cycle characteristics.

## Claims

1. An electrode material comprising a complex including: at least one type of transition metal ion; and a ligand including at least two functional groups (A) that can coordinate with the transition metal ion and at least two conjugate pairs of functional groups (B) that are redox active, wherein
the at least two functional groups (A) may be the same or different, the at least two conjugate pairs of functional groups (B) may be the same or different, and
at least some of the functional groups (A) and at least some of the functional groups (B) may be the same or different.

2. The electrode material according to claim 1, wherein the electrode material is crystalline.

3. The electrode material according to claim 1 or 2, wherein a number of hydration water molecules per one of the transition metal ion in a unit structure of the complex is 0.50 or less.

4. An electrode comprising the electrode material according to any one of claims 1 to 3 as an active material.

5. The electrode according to claim 4, wherein a number of hydration water molecules per one of the transition metal ion in a unit structure of the complex contained in the electrode is 0.50 or less.

6. An electrical storage device comprising: an electrolyte; and the electrode according to claim 4 or 5.

7. The electrical storage device according to claim 6, wherein the electrolyte does not dissolve the electrode material.

8. The electrical storage device according to claim 6 or 7, further comprising a counter electrode of the electrode, wherein the counter electrode contains one type of metal or an alloy including a plurality of types of metals.

9. The electrical storage device according to any one of claims 6 to 8, wherein the electrode further contains either or both of a cellulosic polymer and a polyether polymer.

10. A slurry composition comprising: the electrode material according to any one of claims 1 to 3; and either or both of a cellulosic polymer and a polyether polymer.
